(19)

**Europäisches Patentamt**
**European Patent Office**
**Office européen des brevets**

(11) **EP 4 603 221 A1**

(12) **EUROPEAN PATENT APPLICATION**
published in accordance with Art. 153(4) EPC

(43) Date of publication:
**20.08.2025 Bulletin 2025/34**

(21) Application number: **23891231.5**

(22) Date of filing: **11.10.2023**

(51) International Patent Classification (IPC):
**B23K 26/21** (2014.01)   **B23K 26/323** (2014.01)

(52) Cooperative Patent Classification (CPC):
**B23K 26/21; B23K 26/323**

(86) International application number:
**PCT/JP2023/036938**

(87) International publication number:
**WO 2024/106073 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2022 JP 2022185208**

(71) Applicant: **KABUSHIKI KAISHA KOBE SEIKO
SHO (KOBE STEEL, LTD.)**
**Hyogo 651-8585 (JP)**

(72) Inventor: **MAEDA Kyohei**
**Fujisawa-shi,**
**Kanagawa 251-8551 (JP)**

(74) Representative: **Müller-Boré & Partner
Patentanwälte PartG mbB
Friedenheimer Brücke 21
80639 München (DE)**

(54) **METHOD FOR MANUFACTURING DISSIMILAR-MATERIAL JOINT STRUCTURE, AND
DISSIMILAR-MATERIAL JOINT STRUCTURE**

(57)     To provide a method for manufacturing a joint
structure of dissimilar materials that does not require
special adjustment of welding conditions and that can
prevent generation of blowholes. A method for manufac-
turing a joint structure of dissimilar materials for joining an
aluminum alloy sheet (11) and a steel sheet (21), the
method including: a step of forming a low-temperature
thermal spray coating (12) on at least a part of a surface of
the aluminum alloy sheet (11) by low-temperature spray-
ing a metal powder containing at least one selected from
pure iron, carbon steel, stainless steel, nickel, a nickel
alloy, cobalt, and a cobalt alloy; a step of overlapping the
aluminum alloy sheet (11) and the steel sheet (21) such
that the low-temperature thermal spray coating (12) and
the steel sheet (21) face each other; and a step of
performing laser welding on the steel sheet (21) from a
side opposite to the surface facing the aluminum alloy
sheet (11), in which the metal powder is powdered from a
molten metal in a vacuum or in an inert gas atmosphere.

*FIG. 2*

**Description**

TECHNICAL FIELD

The present invention relates to a method for manufacturing a joint structure of dissimilar materials, and a joint structure of dissimilar materials.

BACKGROUND ART

In recent years, with the purpose of reducing the weight of a vehicle structure, there has been an increasing demand for a joint structure of dissimilar materials in which lightweight aluminum or aluminum alloy material (hereinafter sometimes simply referred to as an aluminum alloy material) is joined to a steel material. There are various methods for joining dissimilar materials, one of which is to form a cold spray coating (hereinafter sometimes referred to as a low-temperature thermal spray coating or a cold spray (CS) coating) on the surface of the aluminum alloy material in advance, and then laser weld the coating to the steel.

However, with the above joining method, blowholes may be generated in a weld metal due to a gas in the CS coating, and these blowholes may cause a decrease in joint strength.

Therefore, for example, Patent Literature 1 proposes a manufacturing method capable of manufacturing a joint structure of dissimilar materials having few blowholes and excellent joint strength. The above method for manufacturing a joint structure of dissimilar materials includes: a step of forming a low-temperature thermal spray coating by low-temperature spraying a predetermined metal powder on at least a part of a surface of an aluminum alloy material; a step of overlapping the aluminum alloy material and the steel material such that the low-temperature thermal spray coating and the steel material face each other; and a step of joining the aluminum alloy material and the steel material by laser welding from the steel material side. The joining step is performed under welding conditions under which a fusion zone is formed in any of the steel material, the low-temperature thermal spray coating, and the aluminum alloy material.

CITATION LIST

PATENT LITERATURE

Patent Literature 1: JP2021-30308A

SUMMARY OF INVENTION

TECHNICAL PROBLEM

However, in the manufacturing method described in the above Patent Literature 1, since the joining step is performed under welding conditions for melting even the aluminum alloy material, the conditions during the laser welding need to be appropriately controlled, and the welding conditions for melting the aluminum alloy material, which is a base material, are limited. In addition, when the aluminum alloy material, which is a base material, is a material containing a large number of pores, such as a die-cast material, there is a concern that blowholes may be generated due to melting a large amount of the aluminum alloy material. Therefore, there is a demand for the development of a method for manufacturing a joint structure of dissimilar materials that can prevent the generation of blowholes even when an allowable range of the welding conditions is set wide.

The present invention has been made in view of such problems, and an object thereof is to provide a method for manufacturing a joint structure of dissimilar materials that does not require special adjustment of welding conditions and that can prevent generation of blowholes, and a joint structure of dissimilar materials having excellent joining strength obtained by the joining method.

SOLUTION TO PROBLEM

The above object of the present invention is achieved by the following configuration (1) related to a method for manufacturing a joint structure of dissimilar materials.

(1) A method for manufacturing a joint structure of dissimilar materials for joining a non-ferrous metal part and a steel material, the method including:

a step of forming a low-temperature thermal spray coating on at least a part of a surface of the non-ferrous metal part by low-temperature spraying a metal powder containing at least one selected from pure iron, carbon steel, stainless steel, nickel, a nickel alloy, cobalt, and a cobalt alloy;

a step of overlapping the non-ferrous metal part and the steel material such that the low-temperature thermal spray coating and the steel material face each other; and

a step of performing laser welding on the steel material from a side opposite to the surface facing the non-ferrous metal part, in which

the metal powder is powdered from a molten metal in a vacuum or in an inert gas atmosphere.

A preferred embodiment of the present invention related to the method for manufacturing a joint structure of dissimilar materials relates to the following configurations (2) and (3).

(2) The method for manufacturing a joint structure of dissimilar materials according to (1), in which the metal powder is manufactured by using one method selected from a gas atomization method, a disk atomization method, a plasma atomization method, and a plasma rotating electrode method.

(3) The method for manufacturing a joint structure of dissimilar materials according to (1) or (2), in which a hydrogen content in the metal powder is 16 ppm or less.

The above object of the present invention is achieved by the following configuration (4) or (5) related to a joint structure of dissimilar materials.

(4) A joint structure of dissimilar materials including:

a non-ferrous metal part and a steel material joined to each other; and

a low-temperature thermal spray coating formed on at least a part of a surface of the non-ferrous metal part by low-temperature spraying a metal powder containing at least one selected from pure iron, carbon steel, stainless steel, nickel, a nickel alloy, cobalt, and a cobalt alloy, in which

the non-ferrous metal part and the steel material are overlapped such that the low-temperature thermal spray coating and the steel material face each other,

a weld metal is formed on a surface of the steel material, the surface being on a side opposite to the non-ferrous metal part, to join the steel material and the low-temperature thermal spray coating, and

a hydrogen content in the low-temperature thermal spray coating is 16 ppm or less.

(5) A joint structure of dissimilar materials including:

a non-ferrous metal part and a steel material joined to each other; and

a low-temperature thermal spray coating formed on at least a part of a surface of the non-ferrous metal part by low-temperature spraying a metal powder containing at least one selected from pure iron, carbon steel, stainless steel, nickel, a nickel alloy, cobalt, and a cobalt alloy, in which

the non-ferrous metal part and the steel material are overlapped such that the low-temperature thermal spray coating and the steel material face each other,

a weld metal is formed on a surface of the steel material, the surface being on a side opposite to the non-ferrous metal part, to join the steel material and the low-temperature thermal spray coating, and

the low-temperature thermal spray coating is made of at least one type of powder selected from a gas atomized powder, a disk atomized powder, a plasma atomized powder, and a powder manufactured by using a plasma rotating electrode method.

ADVANTAGEOUS EFFECTS OF INVENTION

According to the present invention, it is possible to provide a method for manufacturing a joint structure of dissimilar materials that does not require special adjustment of welding conditions and that can prevent generation of blowholes. In addition, according to the present invention, it is possible to provide a joint structure of dissimilar materials having excellent joining strength obtained by the joining method.

BRIEF DESCRIPTION OF DRAWINGS

[FIG. 1A] FIG. 1A is a cross-sectional view showing a step of forming a low-temperature thermal spray coating in a method for manufacturing a joint structure of dissimilar materials according to an embodiment of the present invention.

[FIG. 1B] FIG. 1B is a cross-sectional view showing a joint structure of dissimilar materials manufactured by using the method for manufacturing a joint structure of dissimilar materials according to the embodiment of the present invention.

[FIG. 2] FIG. 2 is a drawing substitute photograph showing gas atomized powders manufactured by using a gas atomization method.

[FIG. 3] FIG. 3 is a drawing substitute photograph showing water atomized powders manufactured by using a water atomization method.

[FIG. 4] FIG. 4 is a diagram showing a joint portion of a joint structure of dissimilar materials manufactured by using each of methods according to an inventive example and a comparative example.

DESCRIPTION OF EMBODIMENTS

Hereinafter, a joint structure of dissimilar materials and a manufacturing method therefor according to embodiments of the present invention will be described in detail with reference to the drawings. It should be noted that the present invention is not limited to the embodiments described below, and can be optionally changed without departing from the scope of the present invention.

The inventor of the present invention has found that when joining dissimilar materials such as a non-ferrous metal part and a steel material, by using a metal powder having a low hydrogen content, which is manufactured by using a method different from that of a metal powder in the related art, as a material for forming a low-temperature thermal spray coating, it is possible to prevent the generation of blowholes.

Hereinafter, a method for manufacturing a joint structure of dissimilar materials and a joint structure of dissimilar materials according to an embodiment of the present invention will be described in detail with reference to the drawings.

[Method for Manufacturing Joint Structure of Dissimilar Materials]

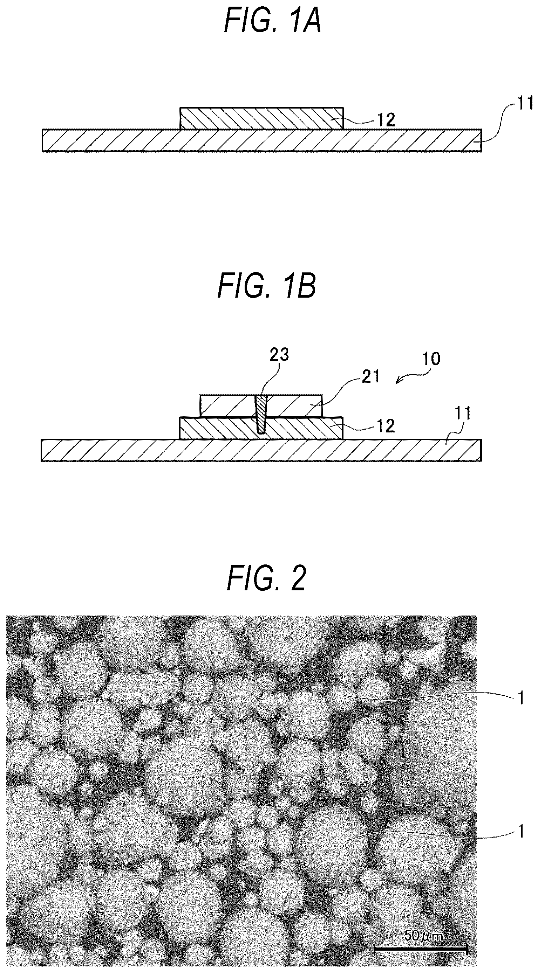

FIG. 1A is a cross-sectional view showing a step of forming a low-temperature thermal spray coating in the method for manufacturing a joint structure of dissimilar materials according to the embodiment of the present invention. FIG. 1B is a cross-sectional view showing a joint structure of dissimilar materials manufactured by using the method for manufacturing a joint structure of dissimilar materials according to the embodiment of the present invention. First, the method for manufacturing a joint structure of dissimilar materials according to the embodiment of the present invention will be described with reference to FIG. 1A and FIG. 1B.

<Material Preparation>

In the present embodiment, a non-ferrous metal part and a steel material are used as materials for manufacturing the joint structure of dissimilar materials. As shown in FIG. 1A and FIG. 1B, in the present embodiment, an aluminum alloy sheet 11 is used as the non-ferrous metal part, and a steel sheet 21 is used as the steel material. It should be noted that the non-ferrous metal part refers to a part made of a non-ferrous metal, and can be made of one selected from aluminum or an aluminum alloy, magnesium or a magnesium alloy, and titanium or a titanium alloy.

The type of the steel material is not particularly limited, and contents of components other than iron can be designed to vary depending on the required performance of the structure.

<Step of Forming Low-temperature Thermal Spray Coating>

First, as shown in FIG. 1A, a low-temperature thermal spray coating 12 is formed on at least a part of a surface of the aluminum alloy sheet 11 by low-temperature spraying a metal powder (not shown). The metal powder used for low-temperature spraying may be selected from those which form a low-temperature thermal spray coating made of a material same as the steel sheet 21 or a material which is easily joined to the steel sheet 21. Specifically, a metal powder containing at least one selected from pure iron, carbon steel, stainless steel, nickel, a nickel alloy, cobalt, and a cobalt alloy is used. In addition, in the present embodiment, the metal powder used is powdered from a molten metal in a vacuum or in an inert gas atmosphere. The properties of such a metal powder will be described in detail later.

<Step of Overlapping Aluminum Alloy Sheet and Steel Sheet>

Next, as shown in FIG. 1B, the aluminum alloy sheet 11 and the steel sheet 21 are overlapped such that the low-temperature thermal spray coating 12 and the steel sheet 21 face each other.

<Step of Performing Laser Welding>

Thereafter, laser welding is performed on a region of the aluminum alloy sheet 11 on which the low-temperature thermal spray coating 12 is formed, from a side opposite to the surface of the steel sheet 21 facing the aluminum alloy sheet 11. Accordingly, a weld metal 23 is formed to join the steel sheet 21 and the low-temperature thermal spray coating 12, thereby manufacturing a joint structure of dissimilar materials.

When joining dissimilar materials such as the aluminum alloy sheet 11 and the steel sheet 21, there is well known a method of forming the low-temperature thermal spray coating 12 made of a material that is easily joined to the steel sheet 21 on the surface of the aluminum alloy sheet 11 and joining the low-temperature thermal spray coating 12 and the steel sheet 21 by laser welding. However, the low-temperature thermal spray coating formed on the surface of the aluminum alloy sheet 11 by using a general method is gasified by laser heat during the step of performing laser welding, and this gas penetrates the weld metal, causing blowholes.

In the present embodiment, since a specific low-temperature thermal spray coating 12 is formed, it is possible to prevent the generation of blowholes in the subsequent step of performing laser welding. The metal powder used in the present embodiment and the low-temperature thermal spray coating formed from this metal powder will be described in more detail below, highlighting differences from metal powders and low-temperature thermal spray coatings in the related art.

(Metal Powder)

Generally, when forming a low-temperature thermal spray coating, a metal powder manufactured by using a water atomization method (water atomized powder) is used. The inventor of the present invention has found that hydrogen in the low-temperature thermal spray coating is vaporized by the heat during the laser welding, causing blowholes, and have conducted various studies on methods for reducing a hydrogen content in the low-temperature thermal spray coating. As a result, as described above, it has been found that it is effective to use a metal powder powdered from a molten metal in a vacuum or in inert gas atmosphere. Examples of the method for manufacturing such a metal powder include a gas atomization method, a disk atomization method, a plasma atomization method, and a plasma rotating electrode method.

The gas atomization method is a method in which a metal material made of desired components for forming a low-temperature thermal spray coating is melted and then powdered by injecting an inert gas into the molten metal at a high pressure. The disk atomization method is a method in which a molten metal obtained by melting a metal material is brought into contact with a rotating disk and scattered by a centrifugal force to powder the material. The plasma atomization method is a method in which plasma is sprayed onto a metal wire made of desired components to melt the metal and then powder the molten metal. The plasma rotating electrode method is a method in which a metal material made of desired components is rotated at a high speed and irradiated with plasma to melt the metal material, and the obtained molten metal is scattered by a centrifugal force to powder the material.

In the present description, a metal powder manufactured by using the gas atomization method is sometimes referred to as a gas atomized powder, and a metal powder manufactured by using a disk atomization method is sometimes referred to as a disk atomized powder. In addition, a metal powder manufactured by using the plasma atomization method is sometimes referred to as a plasma atomized powder, and a metal powder manufactured by using the plasma rotating electrode method is sometimes referred to as a PREP (plasma rotating electrode process) powder.

For the above gas atomized powder, disk atomized powder, plasma atomized powder, and PREP powder, melting and solidification are performed in a vacuum or in an inert gas atmosphere, so that the hydrogen content can be remarkably reduced compared to the water atomized powder. Therefore, the low-temperature thermal spray coating 12 having a reduced hydrogen content can be formed by low-temperature spraying a metal powder manufactured by using one method selected from the gas atomization method, the disk atomization method, the plasma atomization method, and the plasma rotating electrode method on the surface of the aluminum alloy sheet 11.

In order to prevent the generation of blowholes in the weld metal 23 during the laser welding, the hydrogen content in the metal powder used to form the low-temperature thermal spray coating 12 is preferably 16 ppm or less, more preferably 14 ppm or less, still more preferably 12 ppm or less, and particularly preferably 10 ppm or less.

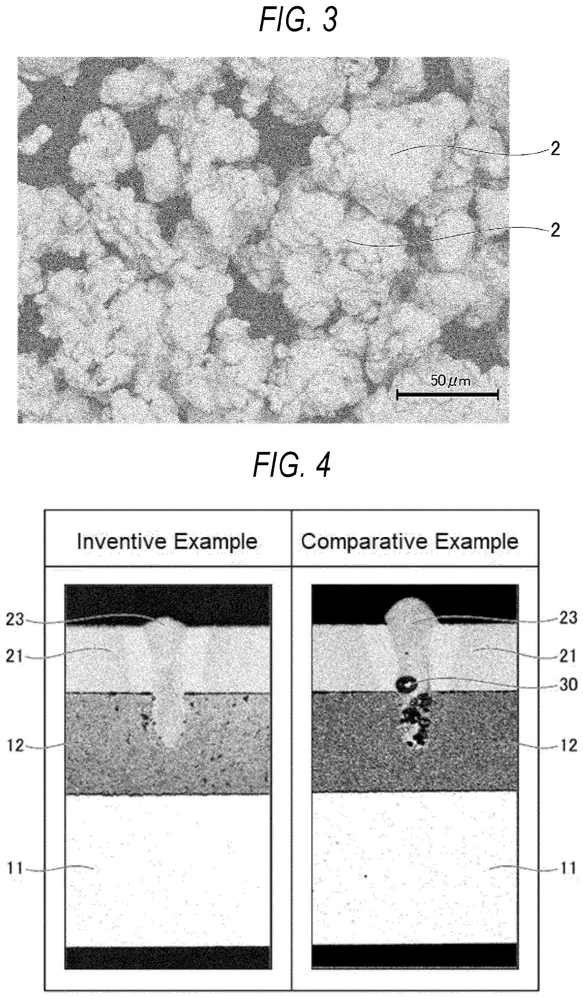

It should be noted that the appearances of the gas atomized powder, the disk atomized powder, the plasma atomized powder, and the PREP powder manufactured by using the above methods are also different from the appearance of the water atomized powder. FIG. 2 is a drawing substitute photograph showing the gas atomized powder manufactured by using the gas atomization method. FIG. 3 is a drawing substitute photograph showing the water atomized powders manufactured by using the water atomization method. The gas atomized powder shown in FIG. 2 and the water atomized powders shown in FIG. 3 have the same components and average particle diameter.

As shown in FIG. 2, since a gas atomized powder 1 is manufactured by cutting a molten metal by injecting a gas and powdering the molten metal, a cooling rate during the manufacturing process is slow and the surface tension gives the powder a smooth, approximately spherical shape. In addition, each gas atomized powder 1 is independent, and no fine particles are fixed to the surface. The disk atomized powder, the plasma atomized powder, and the PREP powder also have similar shapes. In contrast, as shown in FIG. 3, a water atomized powder 2 is powdered by injecting water at a high pressure into a molten metal, and since it is rapidly cooled and solidified, it does not have a spherical shape and has an uneven surface.

(Low-temperature Thermal Spray Coating)

The low-temperature thermal spray coating 12 formed by the method according to the present embodiment is formed by using the metal powder manufactured by using the specific method described above, and therefore has a hydrogen content lower than that of a low-temperature thermal spray coating obtained using the water atomized powder. Therefore, in the step of performing laser welding from an upper surface of the steel sheet 21 after the aluminum alloy sheet 11 and the steel sheet 21 are overlapped, even when the low-temperature thermal spray coating 12 is hot due to the laser heat, the amount of the gas generated from the low-temperature thermal spray coating 12 can be remarkably reduced. As a result, the generation of blowholes can be prevented in the obtained weld metal 23.

In order to prevent the generation of blowholes in the weld metal 23 during the laser welding, the hydrogen content in the low-temperature thermal spray coating 12 is 16 ppm or less, preferably 14 ppm or less, more preferably 12 ppm or less, and still more preferably 10 ppm or less., similar to the hydrogen content in the metal powder.

It should be noted that the surface of the low-temperature thermal spray coating 12 obtained by low-temperature spraying at least one type of powder selected from the gas atomized powder, the disk atomized powder, the plasma atomized powder, and the PREP powder retains the shape of the metal powder. That is, when the outermost surface of the low-temperature thermal spray coating 12 is observed with an electron microscope or the like, particles having characteristic spherical shapes can be seen.

As described in detail above, with the method for manufacturing a joint structure of dissimilar materials according to the present embodiment, since a low-temperature thermal spray coating having a lower hydrogen content can be formed compared to methods in the related art, a weld metal having few blowholes can be formed in the step of performing laser welding. It should be noted that a penetration depth of the weld metal formed by the manufacturing method according to the present embodiment may penetrate the low-temperature thermal spray coating 12 and reach the aluminum alloy sheet 11, or may not reach the aluminum alloy sheet 11. Therefore, there is no need to strictly adjust the laser welding conditions in order to prevent the generation of blowholes, and the allowable range of the manufacturing conditions can be increased.

Further, when the aluminum alloy sheet 11 (non-ferrous metal part), which is a base material, contains a large number of pores, the generation of blowholes can be further prevented by designing the penetration depth of the weld metal not to reach the aluminum alloy sheet 11.

[Joint Structure of Dissimilar Materials]

Next, the joint structure of dissimilar materials according to the present embodiment will be described below with reference to FIG. 1B. The joint structure of dissimilar materials according to the present embodiment can be manufactured by using the above method for manufacturing a joint structure of dissimilar materials according to the present embodiment. Therefore, description of the parts that overlap with the description of the above manufacturing method will be omitted or simplified.

As shown in FIG. 1B, a joint structure of dissimilar materials 10 is manufactured by joining the aluminum alloy sheet 11 and the steel sheet 21. Specifically, the low-temperature thermal spray coating 12 is formed on a part of the surface of the aluminum alloy sheet 11, and the aluminum alloy sheet 11 and the steel sheet 21 are overlapped such that the low-temperature thermal spray coating 12 and the steel sheet 21 face each other. Then, the weld metal 23 penetrates the steel sheet 21 from the surface of the steel sheet 21 opposite to the aluminum alloy sheet 11 to reach the low-temperature thermal spray coating 12, and is formed to join the steel sheet 21 and the low-temperature thermal spray coating 12.

In the present embodiment, the hydrogen content in the low-temperature thermal spray coating 12 is 16 ppm or less. The low-temperature thermal spray coating 12 is as described above, and the hydrogen content is preferably 14 ppm or less, more preferably 12 ppm or less, and still more preferably 10 ppm or less. It should be noted that when the joint structure of dissimilar materials 10 according to the present embodiment is subjected to another step, such as coating using a paint, after being manufactured, the hydrogen content in the low-temperature thermal spray coating 12 may increase. Therefore, the hydrogen content in the low-temperature thermal spray coating 12 in the joint structure of dissimilar materials 10 according to the present embodiment is a value measured within 90 days after manufacturing, before the joint structure of dissimilar materials 10 is subjected to a step that changes the hydrogen content in the low-temperature thermal spray coating 12.

In addition, in the joint structure of dissimilar materials 10 according to another embodiment, the low-temperature thermal spray coating 12 is made of at least one type of powder selected from the gas atomized powder, the disk atomized powder, the plasma atomized powder, and the PREP powder. The metal powder that is the material of the low-temperature thermal spray coating 12 is as described above. It should be noted that after forming the low-temperature thermal spray coating 12 using the above predetermined metal powder and manufacturing the joint structure of dissimilar materials 10, when the steel sheet 21 is peeled off from the aluminum alloy sheet 11, a metal powder having a characteristic spherical shape can be seen on the surface of the low-temperature thermal spray coating 12.

[Examples]

Hereinafter, the method for manufacturing a joint structure of dissimilar materials according to the present invention will be specifically described with reference to an inventive example and a comparative example.

<Manufacturing of Joint Structure of Dissimilar Materials>

First, the aluminum alloy sheet 11 and the steel sheet 21 were prepared, and the low-temperature thermal spray coating 12 was formed on a part of the surface of the aluminum alloy sheet 11 by low-temperature spraying an iron powder under the conditions described below. Next, the steel sheet was placed on top of the aluminum alloy sheet such that the low-temperature thermal spray coating 12 and the steel sheet 21 faced each other. Thereafter, laser welding was performed from above the steel sheet under the conditions described below to join the aluminum alloy sheet 11 and the steel sheet 21.

(Low-temperature Spraying Conditions)

    Device: high-temperature and high-pressure type
    Material of aluminum alloy sheet: 7204 aluminum alloy (sheet thickness: 3 mm)
    Metal powder: gas atomized iron powder (average particle diameter: 43 $\mu$m), or water atomized iron powder (average particle diameter: 43 $\mu$m)
    Gas type: nitrogen gas
    Gas pressure: 5 MPa
    Gas temperature: 1000°C
    Thickness of low-temperature thermal spray coating: 2 mm

(Laser Welding Conditions)

    Upper sheet: 1470 MPa class steel sheet (sheet thickness: 1.4 mm)
    Lower sheet: aluminum alloy sheet on which the above low-temperature thermal spray coating is formed
    Welding machine: Fiber laser (YLS-6000 manufactured by IPG photonics)
    Laser power: 2750 W
    Travel speed: 4 (m/min)
    Spot diameter: 0.3 mm

<Method of Evaluating Joint Structure of Dissimilar Materials>

Cross-sectional photographs of the obtained joints were taken and the blowholes in the weld metal were observed. In addition, a blowhole ratio was calculated according to the following equation using analysis software (Image J).

$$\text{Blowhole ratio (\%)} = \text{total area of blowholes} \times 100/\text{area of weld metal}$$

The types of the metal powder used and the calculated results of the blowhole ratio are shown in Table 1 below, and the cross-sectional photographs taken are shown in FIG. 4.

[Table 1]

Table 1

| | Type of metal powder | Hydrogen content (ppm) in metal powder | Hydrogen content (ppm) in low-temperature thermal spray coating | Blowhole ratio (%) |
|---|---|---|---|---|
| Inventive Example | Gas atomized iron powder | 5.1 | 2.5 | 0.9 |
| Comparative Example | Water atomized iron powder | 18.9 | 23.5 | 23.3 |

As shown in Table 1 and FIG. 4, in the inventive example, the low-temperature thermal spray coating 12 is formed using a gas atomized iron powder, so that the hydrogen content in the low-temperature thermal spray coating 12 is within the range specified by the present invention. Therefore, the blowhole ratio in the weld metal 23 joining the low-temperature thermal spray coating 12 and the steel sheet 21 is remarkably reduced, making it possible to obtain a sound weld metal, and as a result, a joint structure of dissimilar materials having excellent joining strength can be obtained.

On the other hand, in the comparative example, the low-temperature thermal spray coating 12 is formed using a water atomized iron powder, so that the hydrogen content in the low-temperature thermal spray coating 12 is high and outside the range specified by the present invention. Therefore, blowholes 30 were generated in the weld metal 23, and a joint structure of dissimilar materials having excellent joining strength cannot be obtained.

It should be noted that, in both the inventive example and the comparative example, there is a difference between the hydrogen content in the metal powder and the hydrogen content in the low-temperature thermal spray coating. However, in theory, in the case of forming a low-temperature thermal spray coating by low-temperature spraying a metal powder, it is thought that the hydrogen content does not change before and after the low-temperature spraying. Therefore, these differences are thought to be due to measurement errors.

Although various embodiments have been described above, it is needless to say that the present invention is not limited to these examples. It is apparent that those skilled in the art can conceive of various modifications and alterations within the scope described in the claims, and it is understood that such modifications and alterations naturally fall within the technical scope of the present invention. Each component in the embodiments described above may be combined freely in the range without deviating from the spirit of the present invention.

It should be noted that the present application is based on Japanese Patent Application No. 2022-185208, filed on November 18, 2022, and the contents thereof are incorporated herein by reference.

10 Joint structure of dissimilar materials
11 Aluminum alloy sheet
12 Low-temperature thermal spray coating
21 Steel sheet
23 Weld metal
30 Blowhole

Claims

1.   A method for manufacturing a joint structure of dissimilar materials for joining a non-ferrous metal part and a steel material, the method comprising:

a step of forming a low-temperature thermal spray coating on at least a part of a surface of the non-ferrous metal part by low-temperature spraying a metal powder containing at least one selected from pure iron, carbon steel, stainless steel, nickel, a nickel alloy, cobalt, and a cobalt alloy;
a step of overlapping the non-ferrous metal part and the steel material such that the low-temperature thermal spray coating and the steel material face each other; and
a step of performing laser welding on the steel material from a side opposite to the surface facing the non-ferrous metal part, wherein
the metal powder is powdered from a molten metal in a vacuum or in an inert gas atmosphere.

2.   The method for manufacturing a joint structure of dissimilar materials according to claim 1, wherein the metal powder is manufactured by using one method selected from a gas atomization method, a disk atomization method, a plasma atomization method, and a plasma rotating electrode method.

3. The method for manufacturing a joint structure of dissimilar materials according to claim 1 or 2, wherein a hydrogen content in the metal powder is 16 ppm or less.

4. A joint structure of dissimilar materials comprising:

a non-ferrous metal part and a steel material joined to each other; and
a low-temperature thermal spray coating formed on at least a part of a surface of the non-ferrous metal part by low-temperature spraying a metal powder containing at least one selected from pure iron, carbon steel, stainless steel, nickel, a nickel alloy, cobalt, and a cobalt alloy, wherein
the non-ferrous metal part and the steel material are overlapped such that the low-temperature thermal spray coating and the steel material face each other,
a weld metal is formed on a surface of the steel material, the surface being on a side opposite to the non-ferrous metal part, to join the steel material and the low-temperature thermal spray coating, and
a hydrogen content in the low-temperature thermal spray coating is 16 ppm or less.

5. A joint structure of dissimilar materials comprising:

a non-ferrous metal part and a steel material joined to each other; and
a low-temperature thermal spray coating formed on at least a part of a surface of the non-ferrous metal part by low-temperature spraying a metal powder containing at least one selected from pure iron, carbon steel, stainless steel, nickel, a nickel alloy, cobalt, and a cobalt alloy, wherein
the non-ferrous metal part and the steel material are overlapped such that the low-temperature thermal spray coating and the steel material face each other,
a weld metal is formed on a surface of the steel material, the surface being on a side opposite to the non-ferrous metal part, to join the steel material and the low-temperature thermal spray coating, and
the low-temperature thermal spray coating is made of at least one type of powder selected from a gas atomized powder, a disk atomized powder, a plasma atomized powder, and a powder manufactured by using a plasma rotating electrode method.

## FIG. 1A

## FIG. 1B

## FIG. 2

## FIG. 3

## FIG. 4

## INTERNATIONAL SEARCH REPORT

| International application No. |
| --- |
| **PCT/JP2023/036938** |

| A. | CLASSIFICATION OF SUBJECT MATTER |
| --- | --- |

**B23K 26/21**(2014.01)i; **B23K 26/323**(2014.01)i
FI: B23K26/323; B23K26/21 G

According to International Patent Classification (IPC) or to both national classification and IPC

| B. | FIELDS SEARCHED |
| --- | --- |

Minimum documentation searched (classification system followed by classification symbols)

B23K26/21; B23K26/323

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2021-030308 A (KOBE STEEL LTD) 01 March 2021 (2021-03-01)<br>paragraphs [0002]-[0003], [0017]-[0059], fig. 1-5 | 1-5 |
| Y | CN 108315638 A (NORTHWEST INSTITUTE FOR NON-FERROUS METAL RESEARCH) 24 July 2018 (2018-07-24)<br>paragraphs [0035]-[0078], fig. 1-4 | 1-5 |
| Y | JP 2008-183565 A (NIPPON STEEL CORP) 14 August 2008 (2008-08-14)<br>paragraphs [0019]-[0022] | 3-4 |
| A | JP 2017-507251 A (ROVALMA, S.A.) 16 March 2017 (2017-03-16)<br>paragraphs [0028]-[0074], fig. 2-6 | 1-5 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 November 2023** | **05 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/036938**

| Patent document cited in search report | | | Publication date (day/month/year) | Patent family member(s) | Publication date (day/month/year) |
|---|---|---|---|---|---|
| JP | 2021-030308 | A | 01 March 2021 | (Family: none) | |
| CN | 108315638 | A | 24 July 2018 | (Family: none) | |
| JP | 2008-183565 | A | 14 August 2008 | (Family: none) | |
| JP | 2017-507251 | A | 16 March 2017 | US 2016/0348222 A1 paragraphs [0025]-[0072], fig. 2-6 EP 3099440 A2 CN 106029267 A KR 10-2016-0113261 A | |

Form PCT/ISA/210 (patent family annex) (January 2015)

**REFERENCES CITED IN THE DESCRIPTION**

**Patent documents cited in the description**

- JP 2021030308 A
- JP 2022185208 A